# EUROPÄISCHE PATENTSCHRIFT

(11) **EP 0 898 668 B1**
(45) Veröffentlichungstag und Bekanntmachung des Hinweises auf die Patenterteilung: **24.11.1999**
(21) Anmeldenummer: 97921656.1
(22) Anmeldetag: 18.04.1997
(51) Int. Cl.: F16H 57/02, F16H 48/08

(54) **MANUELLE EINSTELLVORRICHTUNG ZUM VERSPANNEN EINES DIFFERENTIALGETRIEBES**
MANUAL ADJUSTER FOR PRESTRESSING A DIFFERENTIAL GEAR
DISPOSITIF DE REGLAGE MANUEL POUR PRE-CONTRAINDRE UN DIFFERENTIEL

(30) Priorität: 17.05.1996 DE 19619937
(43) Veröffentlichungstag der Anmeldung: 03.03.1999
(73) Patentinhaber: Bayerische Motoren Werke Aktiengesellschaft, 80788 München (DE)
(72) Erfinder: WESTERMAIER, Fritz, D-82387 Antdorf (DE)
(74) Vertreter: König, Heinz
(86) Internationale Anmeldenummer: EP9701939
(87) Internationale Veröffentlichungsnummer: WO9744597

(56) Entgegenhaltungen:
- EP-A- 0 604 763
- US-A- 4 492 018
- PATENT ABSTRACTS OF JAPAN vol. 004, no. 114 (M-026), 15.August 1980 & JP 55 072939 A (TOYOTA MOTOR CORP), 2.Juni 1980,
- PATENT ABSTRACTS OF JAPAN vol. 006, no. 220 (M-169), 5.November 1982 & JP 57 124120 A (SEIKI KOGYOSHO:KK), 2.August 1982,

## Beschreibung

Die Erfindung betrifft eine manuelle Einstellvorrichtung zum Verspannen eines Differentialgetriebes, wobei in im Getriebegehäuse vorgesehene Aufnahmenuten Sicherungsringe eingesetzt werden, die an Lagerringen von Kegelrollenlagern zweier Tellerrad-Achsstummel anliegen, und wobei die Breite der Sicherungsringe im Hinblick auf ein gewünschtes Zahnflankenspiel zwischen dem Tellerrad und einem hiermit kämmenden Antriebskegelrad einerseits und auf eine gewünschte Vorspannkraft andererseits bestimmt wird. Zum bekannten Stand der Technik wird beispielshalber auf die DE 36 26 442 A1 verwiesen.

Differentialgetriebe bzw. Hinterachsgetriebe von Kraftfahrzeugen müssen bei ihrem Zusammenbau peinlichst genau eingestellt werden, und zwar sowohl im Hinblick auf die Verspannung der im Getriebegehäuse vorgesehenen, das übliche Tellerrad über Achsstummel tragende Kegelrollenlager, als auch im Hinblick auf das Zahnflankenspiel zwischen dem Tellerrad und einem mit diesem kämmenden Antriebskegelrad. Ein einfacher Aufbau des Getriebes ergibt sich dabei mit den besagten hinsichtlich ihrer Breite angepaßten Sicherungssringen, an denen sich die Lagerringe, insbesondere Lager-Außenringe der Kegelrollenlager abstützen. Die Ermittlung der erforderlichen Breite der Sicherungsringe kann dabei - insbesondere im Werkstattbereich - durch "trial and error" erfolgen, d. h. es werden versuchsweise unterschiedlich breite Sicherungsringe eingebaut, solange bis die gewünschten Werte für das Zahnflankenspiel sowie für die Vorspannkraft erreicht sind. Dies ist jedoch unbefriedigend, so daß sich die Erfindung die Aufgabe gestellt hat, eine einfach handhabbare, manuelle Einstellvorrichtung zum Verspannen aufzuzeigen, mit Hilfe derer die erforderliche Sicherungsring-Breite auf einfache Weise ermittelt werden kann.
Die Lösung dieser Aufgabe ist gekennzeichnet durch den beiden Aufnahmenuten zugeordnete und in diese jeweils mit einer Zugbüchse eingreifende Vorrichtungsteile, die ferner jeweils ein innerhalb der Zugbüchse axial verschiebbares, sich jeweils am Lagerring des Kegelrollenlagers abstützendes Druckstück aufweisen, wobei am ersten Vorrichtungsteil ein das Druckstück über eine Verstellspindel verschiebendes Stellrad vorgesehen ist, während am Druckstück des zweiten Vorrichtungsteiles eine die nötige Vorspannkraft aufbringende Druckspindel angreift. Vorteilhafte Aus- und Weiterbildungen sind Inhalt der Unteransprüche.

Näher erläutert wird die Erfindung anhand eines bevorzugten Ausführungsbeispieles, wobei Fig. 1 im Schnitt ein Differentialgetriebe mit daran befindlicher Einstellvorrichtung zeigt, während in Fig. 2 das erste Vorrichtungsteil und in Fig. 3 das zweite Vorrichtungsteil vergrößert im Schnitt dargestellt sind.

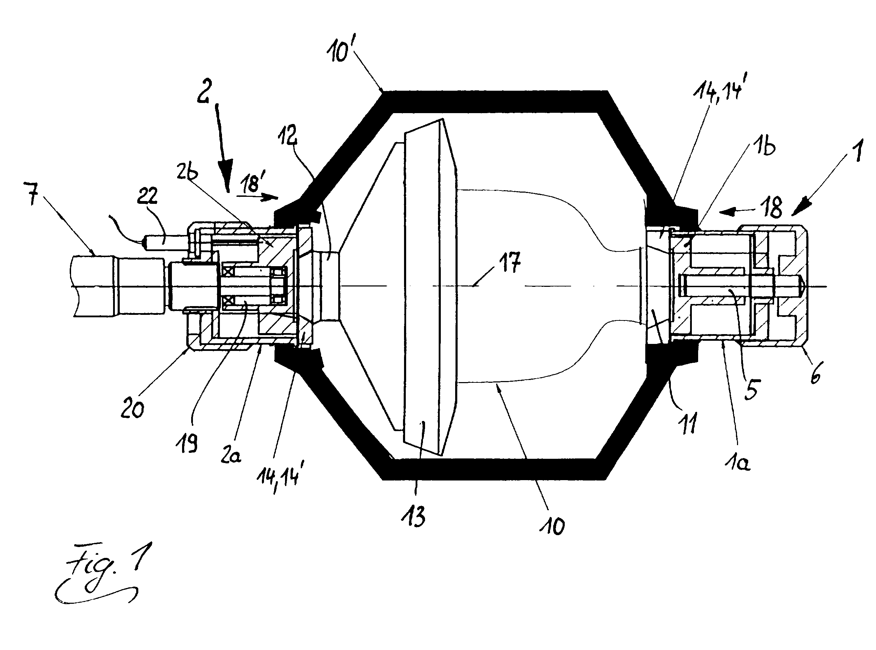

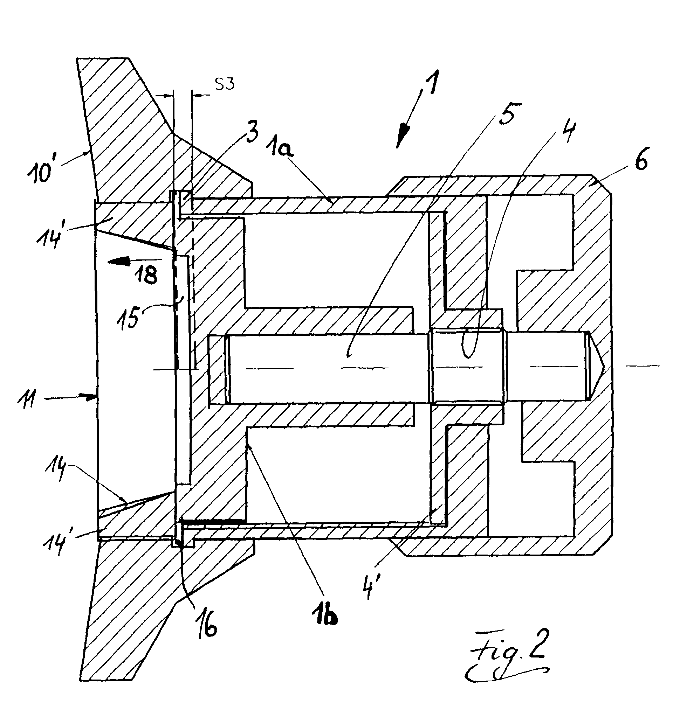

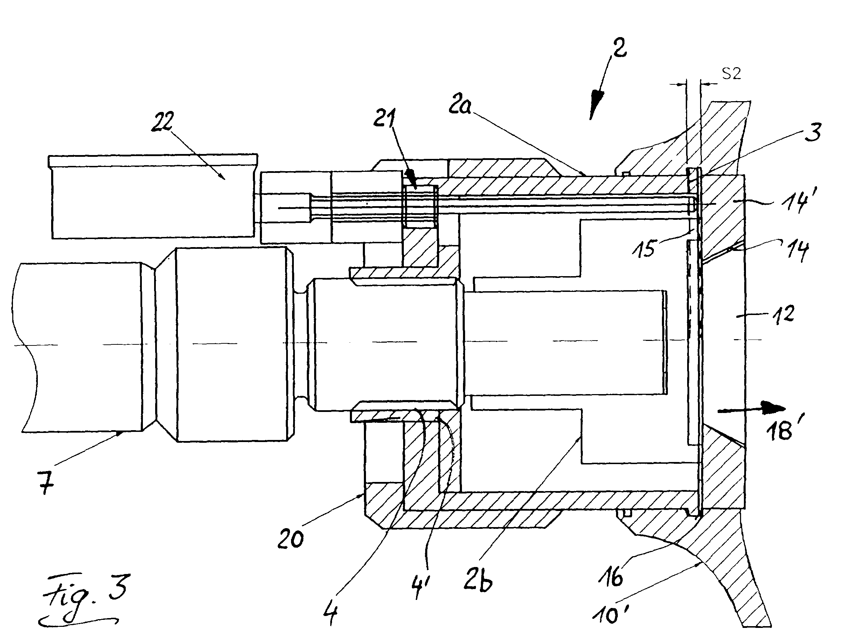

Mit der Bezugsziffer 10' ist das Gehäuse eines in seiner Gesamtheit mit 10 bezeichneten Differentialgetriebes bezeichnet, innerhalb dessen neben einem Tellerrad 13 wie üblich ein mit diesem kämmendes, nicht dargestelltes Antriebs-Kegelrad gelagert ist. Das Tellerrad 13 wird von zwei Achsstummeln 11, 12 getragen, die wie üblich in bekannter Weise über Kegelrollenlager 14 im Getriebe-Gehäuse 10' gelagert sind. Hierzu weist jedes Kegelrollenlager 14 einen Lagerring 14' bzw. Lager-Außenring 14' auf, der sich jeweils nach außen hin an einem in den Fig. 2, 3 jeweils in der oberen Hälfte gestrichelt dargestellten Sicherungsring 15 abstützt. Dieser Sicherungsring 15, der in einer Aufnahmenut 16 im Gehäuse 10' geführt ist, ist in den Fig. 2, 3 lediglich gestrichelt dargestellt, da er sich während dieses dargestellten Zustandes, währenddessen die noch zu beschreibende manuelle Einstellvorrichtung am Differentialgetriebe 10 angesetzt ist, überhaupt nicht im Gehäuse 10' befindet. Es ist jedoch klar ersichtlich, daß über die Breite der beiden Sicherungsringe 15 (in Fig. 1 sowohl am linksseitigen als auch am rechtsseitigen Kegelrollenlager 14) nicht nur die in den Kegelrollenlagern 14 wirkende Vorspannkraft, sondern auch das Zahnflankenspiel zwischen dem Tellerrad 13 sowie dem mit diesem kämmenden Antriebskegelrad festgelegt ist.

Die Festlegung der benötigten Breite der Sicherungsringe 15 zur Erzielung der gewünschten Vorspannkraft sowie des gewünschten Zahnflankenspieles erfolgt dabei folgendermaßen:
Zunächst wird das in seiner Gesamtheit mit 1 bezeichnete erste Vorrichtungsteil der manuellen Einstellvorrichtung unter Weglassen des Sicherungsringes 15 im Bereich des rechtsseitigen Kegelrollenlagers 14 in das Getriebegehäuse 10' eingesetzt, während das zweite Vorrichtungsteil 2 im Bereich des linksseitigen Kegelrollenlagers 14 in das Getriebe-Gehäuse 10' eingesetzt wird. Anschließend wird am Vorrichtungsteil 1 eine Grundeinstellung vorgenommen, wonach mittels des Vorrichtungsteiles 2 die geforderte Vorspannkraft aufgebracht wird. Mit dieser Grundeinstellung kann nun das Zahnflankenspiel gemessen werden. Liegt dieses Zahnflankenspiel noch nicht im gewünschten Größenbereich, so wird die Vorspannkraft am Vorrichtungsteil 2 herabgesetzt und am Vorrichtungsteil 1 die Grundeinstellung in entsprechender Weise geändert. Nach neuerlichem Aufbringen der erforderlichen Vorspannkraft über das Vorrichtungsteil 2 kann das Zahnflankenspiel abermals gemessen werden. Dieser Vorgang wird solange wiederholt, bis das Zahnflankenspiel den gewünschten Wert besitzt, wonach an den beiden Vorrichtungsteilen 1 und 2 die jeweils aktuelle Sicherungsring-Breite abgelesen werden kann. Wie dies detailliert erfolgt, wird im folgenden näher erläutert:

Sowohl das Vorrichtungsteil 1, als auch das Vorrichtungsteil 2 besitzen jeweils eine sog. Zugbüchse 1a bzw. 2a, wobei jede Zugbüchse 1a, 2a an ihrem freien Ende einen Bund 3 aufweist, mit welchem sie in die jeweilige Aufnahmenut 16 im Gehäuse 10' einsetzbar ist. Um dieses Einsetzen zu ermöglichen, muß jede Zugbüchse 1a, 2a in Richtung ihrer Längsachse (= Achsrichtung 17) geteilt ausgebildet sein, d. h. sie besteht aus zumindest zwei Teilschalen, um das Einsetzen mit dem am freien Ende vorgesehenen Bund 3 in die Aufnahmenut 16 überhaupt zu ermöglichen.

Koaxial ist innerhalb der Zugbüchse 1a, 2a bei beiden Vorrichtungsteilen 1, 2 jeweils ein in Achsrichtung 17 verschiebbares Druckstück 1b, 2b vorgesehen, welches sich im dargestellten Zustand jeweils am zugeordneten Lagerring 14' abstützt.

Beim ersten Vorrichtungsteil 1 greift am Druckstück 1b eine sich über ein Gewinde 4 an der Zugbüchse 1a abstützende Verstellspindel 5 an, deren freies Ende ein Stellrad 6 trägt. Im hier gezeigten Ausführungsbeispiel ist das Gewinde 4 in einer Gewindebüchse 4' vorgesehen, die sich ihrerseits an der Zugbüchse 1a abstützt, jedoch kann das Gewinde 4 abweichend von diesem Ausführungsbeispiel auch direkt in der Zugbüchse 1a vorgesehen sein. Stets ist es mit diesem Vorrichtungsteil 1 somit möglich, durch Drehen des Stellrades 6 das Druckstück 1b gegenüber der Zugbüchse 1a axial zu verschieben und somit - da sich die Zugbüchse 1a am Gehäuse 10' abstützt - mit dem Druckstück 1b auf den Lagerring 14' eine Vorspannkraft gemäß Pfeilrichtung 18 aufzubringen.

Auch am Vorrichtungsteil 2 ist - wie bereits erläutert - neben einer Zugbüchse 2a ein Druckstück 2b vorgesehen, welches auf den entsprechenden Lagerring 14' des Kegelrollenlagers 14 eine gegen Pfeilrichtung 18 wirkende Vorspannkraft 18' aufbringen kann, so daß insgesamt mit den beiden Druckstücken 1b, 2b bzw. mit den beiden Vorrichtungsteilen 1, 2 die beiden Kegelrollenlager 14 verspannt werden können. Dabei wirkt auf das Druckstück 2b eine Druckspindel 7 ein, die beispielsweise hydraulisch betätigt, d. h. in Pfeilrichtung 18' verschoben werden kann. Um dabei zu ermöglichen, daß die Druckspindel 7, die sich abermals über ein Gewinde 4 sowie über eine Gewindebüchse 4' an der Zugbüchse 2a abstützt, um die Achse 17 gedreht werden kann, ist eine Wälzlageranordnung 19 zwischen dem Ende der Druckspindel 7 sowie dem Druckstück 2b vorgesehen. Ferner befindet sich am Vorrichtungsteil 2 für dessen genaue Positionierung ein Zentrierring 20.

Während am Vorrichtungsteil 1 eine nicht näher dargestellte Meßskala vorgesehen ist, an welcher unter Zusammenwirken des Stellrades 6 mit der Zugbüchse 1a die erforderliche Breite des Sicherungsringes, d. h. der erforderliche Abstand S3 ablesbar ist, ist am Vorrichtungsteil 2 eine Aufnahme 21 für ein Meßmittel 22 zur Ermittlung der Breite S2 des zugeordneten Sicherungsringes 15 vorgesehen. Bei diesem Meßmittel 22 kann es sich dabei um eine Meßuhr handeln.

Wie bereits kurz erläutert werden somit beim Zusammenbau des Differentialgetriebes 10 zunächst die beiden Sicherungsringe 15 weggelassen, während an deren Stelle die beiden Vorrichtungsteile 1, 2 eingesetzt werden. Mittels des Stellrades 6 wird am Vorrichtungsteil 1 zunächst eine Grundeinstellung vorgenommen. Anschließend wird mit der Druckspindel 7 am Vorrichtungsteil 2 die geforderte Vorspannkraft gemäß Pfeilrichtung 18' aufgebracht. In aller Regel wird nun das Zahnflankenspiel zwischen dem Tellerrad 13 sowie dem Antriebskegelrad nicht den gewünschten Wert besitzen. Nach Rücknahme der Vorspannkraft gemäß Pfeilrichtung 18' am Vorrichtungsteil 2 kann am Vorrichtungsteil 1 mittels des Stellrades 6 eine Neueinstellung vorgenommen werden und zwar in der Richtung, daß das Zahnflankenspiel dem gewünschten Wert näherkommt. Anschließend wird am Vorrichtungsteil 2 mit der Druckspindel 7 abermals die geforderte Vorspannkraft gemäß Pfeilrichtung 18' aufgebracht. Liegt nunmehr das abermals zu messende Zahnflankenspiel im gewünschten Wertebereich, so kann direkt am Vorrichtungsteil 1 an der kurz beschriebenen Meßskala die erforderliche Sicherungsring-Breite S3 abgelesen werden. Am Vorrichtungsteil 2 ist dies mittels des vorjustierten Meßmittels 22 ebenfalls möglich. Anschließend daran werden die Vorrichtungsteile 1, 2 der beschriebenen Einstellvorrichtung entfernt und die jeweils benötigten Sicherungsringe 15 mit den Breiten-Abmessungen S3 bzw. S2 eingesetzt. Der beschriebene Einstellvorgang ist mit der beschriebenen manuellen Einstellvorrichtung somit äußerst einfach und zeitsparend realisierbar, wobei in einem einzigen Arbeitsgang sowohl die Vorspannung der Kegelrollenlager 14 als auch das gewünschte Zahnflankenspiel eingestellt werden können. Dabei können selbstverständlich eine Vielzahl von Details insbesondere konstruktiver Art durchaus abweichend vom gezeigten Ausführungsbeispiel gestaltet sein, ohne den Inhalt der Patentansprüche zu verlassen.

## Patentansprüche

1. Manuelle Einstellvorrichtung zum Verspannen eines Differentialgetriebes (10), wobei in im Getriebe-Gehäuse (10') vorgesehene Aufnahmenuten (16) Sicherungsringe (15) eingesetzt werden, die an Lagerringen (14') von Kegelrollenlagern (14) zweier Tellerrad-Achsstummel (11, 12) anliegen, und wobei die Breite (S3, S2) der Sicherungsringe (15) im Hinblick auf ein gewünschtes Zahnflankenspiel zwischen dem Tellerrad (13) und einem hiermit kämmenden Antriebskegelrad einerseits und auf eine gewünschte Vorspannkraft (18, 18') andererseits bestimmt wird,
gekennzeichnet durch den beiden Aufnahmenuten (16) zugeordnete und in diese jeweils mit einer Zugbüchse (1a, 2a) eingreifende Vorrichtungsteile (1, 2), die ferner jeweils ein innerhalb der Zugbüchse (1a, 2a) axial verschiebbares, sich jeweils am Lagerring (14') des Kegelrollenlagers (14) abstützendes Druckstück (1b, 2b) aufweisen,
wobei am ersten Vorrichtungsteil (1) ein das Druckstück (1b) über eine Verstellspindel (5) verschiebendes Stellrad (6) vorgesehen ist, während am Druckstück (2b) des zweiten Vorrichtungsteiles (2) eine die nötige Vorspannkraft (18') aufbringende Druckspindel (7) angreift.

2. Manuelle Einstellvorrichtung nach Anspruch 1,
dadurch gekennzeichnet, daß am ersten Vorrichtungsteil (1) eine Meßskala vorgesehen ist, an welcher unter Zusammenwirken des Stellrades (6) mit der Zugbüchse (1a) die erforderliche Breite (S3) des zugeordneten Sicherungsringes (15) ablesbar ist.

3. Manuelle Einstellvorrichtung nach Anspruch 1 oder 2,
dadurch gekennzeichnet, daß am zweiten Vorrichtungsteil (2) eine Aufnahme (21) für ein Meßmittel (22) zur Ermittlung der Breite (S2) des zugeordneten Sicherungsringes (15) vorgesehen ist.

4. Manuelle Einstellvorrichtung nach einem der vorangegangenen Ansprüche,
dadurch gekennzeichnet, daß jede Zugbüchse (1a, 2a) aus zumindest zwei Teilschalen besteht, um ein Einsetzen mit einem am freien Ende vorgesehenen Bund (3) in die Aufnahmenut (16) zu ermöglichen.

## Claims

1. A manual adjusting device for pre-stressing a differential gear (10), retaining rings (15) being inserted in grooves (16) for receiving them in the gear casing (10') and abutting rings (14') of tapered-roller bearings (14) on two ring-gear axle journals (11, 12), wherein the width (S3, S2) of the retaining rings (15) is determined with reference on the one hand to a desired initial pre-stressing force (18, 18') and on the other hand with regard to a desired tooth-flank clearance between the ring gear (13) and a driving bevel gear meshing therewith,
characterised by parts (1, 2) of a device associated with the two grooves (16) and engaging therein via respective tension sleeves (1a, 2a) and also comprising respective pressure members (1b, 2b) axially movable inside the tension sleeve (1a, 2a) and abutting the ring (14') of the tapered-rolling bearing (14), wherein an adjusting wheel (6) for moving the pressure member (1b) via a spindle (5) is provided on the first part (1), whereas a pressure spindle (7) for applying the required initial pre-stressing force (18') engages the pressure member (2b) on the second part (2).

2. A manual adjusting device according to claim 1,
characterised in that a measuring scale is provided on the first part (1) of the device and the required width (S3) of the associated retaining ring (15) can be read off the scale when the adjusting wheel (6) co-operates with the tension sleeve (1a).

3. A manual adjusting device according to claim 1 or claim 2,
characterised in that a seat (21) for a measuring means (22) for determining the width (S2) of the associated retaining ring (15) is provided on the second part (2) of the device.

4. A manual adjusting device according to any of the preceding claims,
characterised in that each tension sleeve (1a, 2a) comprises at least two part-shells so that a collar (3) on the projecting end can be inserted into the groove (16).

## Revendications

1. Dispositif de réglage manuel de la précontrainte d'un différentiel (10), comportant des bagues d'arrêt (15) placées dans des rainures de réception (16) du boîtier (10') du différentiel, ces bagues s'appliquant contre les bagues de palier (14') de palier à roulement conique (14) de deux embouts d'axe (11, 12) de la roue solaire et, on détermine la largeur (S3, S2) des bagues d'arrêt (15) pour avoir d'une part le jeu souhaité entre les flancs de dents de la roue solaire (13) et d'une roue conique d'entraînement engrenant avec celle-ci, et d'autre part une force de précontrainte (18, 18') souhaitée,
caractérisé par
des parties de dispositif (1, 2) associées aux deux rainures de réception (16) et pénétrant dans celles-ci à l'aide d'un manchon de traction (1a, 2a) ; ces parties ayant chacune à l'intérieur des manchons de traction (1a, 2a), un poussoir (1b, 2b) coulissant axialement et s'appuyant respectivement contre une bague de palier (14') du palier à roulement conique (14), la première partie de dispositif (1) comportant un volant de réglage (6) déplaçant le poussoir (1b) par une broche de réglage (5) alors que le poussoir (2b) de la seconde partie de dispositif (2) est soumis à l'action d'une broche de pression (7) exerçant la force de précontrainte nécessaire (18').

2. Dispositif de réglage manuel selon la revendication 1,
caractérisé en ce que
la première partie de dispositif (1) porte une échelle de mesure permettant de lire la largeur nécessaire (S3) du volant d'arrêt (15) correspondante par l'effet conjugué de la roue de réglage (6) avec le manchon de traction (1a).

3. Dispositif de réglage manuel selon la revendication 1 ou 2,
caractérisé en ce que
la seconde partie du dispositif (2) comporte un logement (21) pour recevoir un moyen de mesure (22) permettant de déterminer la largeur (S2) de la bague d'arrêt (15) associée.

4. Dispositif de réglage manuel selon l'une quelconque des revendications précédentes,
caractérisé en ce que
chaque manchon de traction (1a, 2a) est formé d'au moins deux parties de coquilles pour permettre la mise en place de la collerette 3 prévue à l'extrémité libre dans la rainure de réception (16).
